# EUROPEAN PATENT SPECIFICATION

(11) **EP 3 021 476 B1**
(45) Date of publication and mention of the grant of the patent: **11.12.2019**
(21) Application number: 14823154.1
(22) Date of filing: 19.02.2014
(51) Int. Cl.: H02N 1/04

(54) **SLIDING-FRICTION POWER GENERATOR, POWER GENERATION METHOD AND VECTOR DISPLACEMENT SENSOR**
GLEITREIBUNGS-STROMGENERATOR, STROMERZEUGUNGSVERFAHREN UND VEKTORVERSCHIEBUNGSSENSOR
GÉNÉRATEUR DE PUISSANCE À FRICTION DE GLISSEMENT, PROCÉDÉ DE GÉNÉRATION DE PUISSANCE ET CAPTEUR DE DÉPLACEMENT DE VECTEUR

(30) Priority: 11.07.2013 CN 201310291321
(43) Date of publication of application: 18.05.2016
(73) Proprietor: Beijing Institute of Nanoenergy and Nanosystems, Beijing 100083 (CN)
(72) Inventor: WANG, Zhonglin, Beijing 100190 (CN); YANG, Ya, Beijing 100190 (CN); ZHANG, Huling, Beijing 100190 (CN)
(74) Representative: Studio Torta S.p.A.
(86) International application number: PCT/CN2014/072244
(87) International publication number: WO 2015/003497

(56) References cited:
- CN-A- 102 684 546
- CN-A- 103 107 732
- CN-U- 202 818 150
- CN-U- 202 949 379
- DE-A1- 4 429 029
- DE-A1-102011 051 370
- US-A1- 2010 253 184

## Description

### BACKGROUND

### Technical Field

The present disclosure relates to an electric generator, and particularly, to a sliding-mode triboelectric generator and a method of power generation, which convert mechanical energy into electrical energy, and a vector displacement sensor in which the sliding-mode triboelectric generator is applied.

### Description of the Related Art

It is operational principle of a sliding-mode triboelectric generator that it is based on account of surface charge transfer due to friction between two different friction materials. However, all the sliding-mode triboelectric generators which have been reported adopt deposition of conductive metal on surface of the friction film material as a layer of electrode, so as to output electrical energy. The sliding-mode triboelectric generator of such configuration is complicated in structure, which leads to increment of manufacturing cost of components. Existing sliding-mode triboelectric generator requires two layers of electrodes to output the electrical energy generated. Accordingly, this configuration of the existing sliding-mode triboelectric generator greatly hinders development and application of such sliding-mode triboelectric generator.

DE4429029 discloses a frictional generator having a flat conductor (25, 45) and a flat insulator (27, 47). In mutual contact, the conductor and insulator move relative to one another, generating static electricity by friction. This energy can be removed between the conductor and a second, pref. earth reference conductor (29, 49). The generator has a band or mat form, the conductor (25) and the insulator (27) being coaxial or in parallel planes. The electrical conductor (25) and the insulator (27) may both be surrounded by an electrically conductive screen (29).

### SUMMARY

The present disclosure provides a single electrode type sliding-mode triboelectric generator, which is simple in configuration and is capable of converting mechanical energy from external force into electrical energy.

In order to achieve the abovementioned object, the present disclosure provides a sliding-mode triboelectric generator comprising:
a friction layer, a lower surface of which is provided to be in contact with a first conductive layer, the first conductive layer being electrically connected to an isopotential;
a second conductive layer provided above the friction layer, a lower surface of the second conductive layer being opposite to an upper surface of the friction layer;
wherein, an electrical signal is outputted when a relatively sliding friction occurs between the upper surface of the friction layer and the lower surface of the second conductive layer while a friction area changes in the course of the sliding.

Preferably, there is a difference in triboelectric series between material for the upper surface of the friction layer and material for the lower surface of the second conductive layer.

Preferably, the first conductive layer is connected, via an external circuit that needs to be power supplied, to be grounded or to an isopotential circuit.

Preferably, the first conductive layer is electrically connected, via an external load, to the isopotential.

Preferably, the lower surface of the second conductive layer is provided to be in contact with the upper surface of the friction layer.

Preferably, the second conductive layer does not come into contact with the friction layer when no external force is applied, while, the lower surface of the second conductive layer comes into contact with the upper surface of the friction layer when an external force is applied.

Preferably, material for the upper surface of the friction layer is selected from insulator material.

Preferably, the insulator material is selected from polymeric material.

Preferably, the polymeric material is selected from PMMA, nylon, polyvinyl alcohol, polyester, polyisobutylene, polyurethane sponge, polyethylene terephthalate, polyvinyl butyral, polychloroprene, natural rubber, polyacrylonitrile, poly phenol carbonate, polyetherchloride, polyvinylidene chloride, polystyrene, polyethylene, polypropylene, polyimide, polyvinyl chloride, polydimethylsiloxane, and polytetrafluoroethylene.

Preferably, the friction layer has a thickness of 100nm∼5mm.

Preferably, material for the second conductive layer is selected from metal, indium tin oxide, or organic conductor.

Preferably, the metal is selected from gold, silver, platinum, aluminum, nickel, copper, titanium, chromium or selenium, and alloy formed by the above; and, the organic conductor is selected from polypyrrole, polyphenyl thioether, poly phthalocyanine, polyaniline, and/or polythiophene.

Preferably, the second conductive layer comprises film material.

Preferably, the second conductive layer has a thickness of 10nm∼5mm.

Preferably, the lower surface of the second conductive layer and/or the upper surface of the friction layer are/is disturbed fully or partially with microstructure with on the scale of a nanometer, micrometer, or submicrometer, the microstructure comprising a structure of nanowire, nanotube, nanoparticle, nanorod, nano flower, nano groove, micron groove, nano cone, micron cone, nanosphere and micronsphere, and an array thereof, or, spots or coatings of nano materials.

Preferably, the lower surface of the second conductive layer and/or the upper surface of the friction layer are/is chemically modified.

Preferably, a functional group which is prone to lose electrons is introduced into a surface of a material having a positive rating on a triboelectric series, or a functional group which is prone to gain electrons is introduced into a surface of a material having a negative rating on the triboelectric series.

Preferably, in the lower surface of the second conductive layer and/or the upper surface of the friction layer, positive charges are introduced into the surface that has the positive rating, and, negative charges are introduced into the surface that has the negative rating.

Preferably, the lower surface of the second conductive layer is a flat surface or a curved surface; and/or, the upper surface of the friction layer is a flat surface or a curved surface.

Preferably, the lower surface of the second conductive layer and the upper surface of the friction layer are surfaces which are complemented with each other.

Preferably, the upper surface of the friction layer is an uneven surface with concave-convex structure, and, the lower surface of the second conductive layer is an uneven surface with concave-convex structure.

Preferably, the second conductive layer and/or the friction layer are/is of soft material or rigid material.

Preferably, the second conductive layer and/or the friction layer are/is of elastic material.

Preferably, it further comprises a first substrate on which the lower surface of the first conductive layer is disposed; and/or, a second substrate on which the upper surface of the second conductive layer is disposed.

Preferably, the friction layer is formed of a plurality of friction units, upper surfaces of the friction units forming the upper surface of the friction layer.

Preferably, the lower surface of the second conductive layer is in contact with and rubs against the upper surfaces of the two adjacent ones of the friction units asynchronously.

Preferably, the friction unit has a shape of strip or square.

Preferably, the plurality of friction units is arranged in a preset pattern.

Preferably, the first conductive layer is formed of a plurality of first conductive units corresponding to the plurality of friction units, respectively, each of the first conductive units being electrically connected to the isopotential.

Preferably, the second conductive layer is formed of a plurality of second conductive units, lower surfaces of the plurality of second conductive units forming the lower surface of the second conductive layer.

Preferably, lower surfaces of the plurality of second conductive units are in the same flat surface, and, upper surfaces of the plurality of friction units are in the same flat surface.

Preferably, lower surfaces of the plurality of second conductive units and upper surfaces of the plurality of friction units are in the same curved surface.

Correspondingly, the present disclosure also provides a vector displacement sensor comprising an electric generator of claim 29, wherein, a detection device is connected between each of the conductive units and the isopotential and is configured for detecting the electrical signal; when the sliding friction occurs between the upper surface of the friction layer and the lower surface of the second conductive layer while the friction area changes, position of the second conductive layer is determinable in accordance with position of the detection device by which the electrical signal is detected, or, sliding distance, sliding direction or sliding speed of the second conductive layer is determinable in accordance with positions of the detection devices by which the electrical signal is detected successively.

Preferably, the detection device is an electric current or electric voltage detecting device, and the electrical signal is an electric current or electric voltage signal; or, the detection device is a light-emitting element or a sounder element, and a light signal or a sound signal is outputted when the electrical signal is detected by the light-emitting element or the sound element.

Preferably, it further comprises a divider resistance between each of the electrode units and the isopotential, the divider resistance being connected in parallel or in series with the detection device.

Preferably, the electric generator comprises sixteen friction units, of which four friction units constitute one group and which form a cross configuration by distributing in four directions, and, the four friction units in each group are arranged in parallel and equidistantly.

Preferably, the sixteen friction units are of strip-shaped PTFE film, each friction unit has a width of 10mm and a length of 2.5cm, and a distance between the friction units is 2mm.

Correspondingly, the present disclosure further provides a method of power generation, the method comprising:
providing a friction layer, a lower surface of which being provided with a first conductive layer, and the first conductive layer being electrically connected, via a load, to an isopotential; and
occurring a relatively sliding friction between a second conductive layer and the upper surface of the friction layer while changing a friction area, such that electric current flows through the load.

Compared with the prior art, the present disclosure has the following advantageous.
1. It is first time to fabricate a single electrode-based sliding-mode triboelectric generator. The generator is only needed to provide a friction layer material with one surface provided with a first conductive layer and a second conductive layer material (e.g., polymer and metal materials), and electrically connect the first conductive layer material to an isopotential, so as to fabricate an electric generator. Output of electrical energy to external will be achieved by the sliding friction between the friction layer material and the second conductive layer material. The sliding-mode triboelectric generator of the present disclosure is a single electrode type sliding-mode triboelectric generator that is simple in configuration.
2. In the sliding-mode triboelectric generator of the present disclosure, the first conductive layer (or the first conductive units) is required to be electrically connected to the isopotential while no connection is required for the second conductive layer. As long as a relatively sliding friction occurs between the friction layer and the second conductive layer while a friction area changes in the course of the sliding, power may be supplied to the load connected between the first conductive layer (or the first conductive units) and the isopotential. The electric generator of such configuration is widely applicable in moving objects, to convert the relative friction in the course of the movement into electrical energy. For example, collection of mechanical energy from the friction between an automobile tire and the ground surface, or applications in fields including touch screen, etc..
3. In the sliding-mode triboelectric generator of the present disclosure, all components may be made of soft materials or elastic materials. Therefore, it can be combined with flexible elements in use.
4. The present disclosure provides a vector displacement sensor where the sliding-mode triboelectric generator is used. It is a self-driven sensor and adopts an electric generator where the friction layer is consisted of a plurality of friction units. When the second conductive layer slides or moves on the friction units, the detection device connected between the first conductive units corresponding to the friction units and the isopotential detects the electrical signal. No power supply is required for the sensor, it relies on the electrical signals created from the sliding frictions between the friction units which are triggered successively and the second conductive layer in the course of movement of the object, to track moving direction, moving distance and moving speed of the second conductive layer, and to fix a position on the object. The vector displacement sensor of the present disclosure does not require any additional power supplies, and it is not only applicable in small-sized device, for example, touch screen, but also is especially suitable for environment where no replacement of power supply is required.
5. In the sliding-mode triboelectric generator and the vector displacement sensor where the sliding-mode triboelectric generator is used, of the present disclosure, insulating material is used as material for the friction layer. It has a wide range of selection of materials. Environmentally friendly materials may be selected in large-scale. It is an energy collection device which has wide range of applications.

### BRIEF DESCRIPTION OF THE DRAWINGS

These and/or other objects, features and advantages of the present disclosure will become apparent and more readily appreciated from those shown in the accompanying drawings. In these figures, the same reference signs denote the same elements. These figures are not intended to be drawn to scale, only for showing the subject matter of the present disclosure.
Fig. 1 is a typically structural schematic view of a sliding-mode triboelectric generator according to the present disclosure;
Fig. 2 is a schematic view of electricity generation principle of a sliding-mode triboelectric generator according to the present disclosure;
Fig. 3 is a structural schematic view of an electric generator in which a lower surface of a first conductive layer is provided on a first substrate and an upper surface of a second conductive layer is provided on a second substrate;
Fig. 4 is a structural schematic view of an electric generator in which an upper surface of a friction layer and a lower surface of a second conductive layer are embodied as curved surfaces;
Fig. 5 is a structural schematic view of an electric generator in which an upper surface of a friction layer and a lower surface of a second conductive layer are of uneven surfaces with concave-convex structure;
Fig. 6 is a schematic view of electricity generation process of an electric generator in which a friction layer is consisted of a plurality of friction units;
Fig. 7 is a schematic view of electricity generation process of an electric generator in which a friction layer is consisted of a plurality of friction units and a first conductive layer is consisted of a plurality of first conductive units;
Fig. 8 is a structural schematic view of an electric generator in which a second conductive layer is consisted of a plurality of second conductive units;
Fig. 9 is a structural schematic view of an electric generator in which lower surfaces of a plurality of second conductive units and upper surfaces of a plurality of friction units are in the same curved surface;
Fig. 10 is a schematic view of a vector displacement sensor according to an embodiment.

### DETAILED DESCRIPTION OF THE EMBODIMENTS

Technical solutions of the present disclosure will be described completely and clearly hereinafter in detail with reference to the attached drawings.

Conventional sliding-mode triboelectric generator is provided to include two kinds of friction materials and convert mechanical energy into electrical energy, for power generation, by means of transfer of surface charges through a relative friction between the friction materials. This triboelectric generator not only has complicated structure, but also requires two electrode layers for output of the generated electrical energy, which limits its applications. The present disclosure provides a single electrode type sliding-mode triboelectric generator, and its technical solution is to power a load or an external circuit connected between the electrode layer and the isopotential, depending on transfer of surface charges due to a relative friction between a conductive material and a triboelectric material that have a difference in triboelectric series, and on electrical connection of the electrode layer of the triboelectric material to the isopotential.

Here, the term "triboelectric series" means the order of materials for reflecting degrees of their attraction to charge. At the moment when two materials rub against each other, negative charges on the friction surface are transferred from the surface of one material that has a relatively positive rating in triboelectric series to the surface of the other material that has a relatively negative rating in triboelectric series. For example, in case that polymer material Teflon is contact with metal material aluminium foil, aluminium foil is positively charged, namely, has a relatively weaker ability to gain electrons, while, polymer material Teflon is negatively charged, namely, has a relatively stronger ability to gain electrons. In case that polymer material nylon is contact with aluminium foil, polymer material nylon is positively charged, namely, has a relatively weaker ability to gain electrons, while, aluminium foil is negatively charged, namely, has a relatively stronger ability to gain electrons. So far, there is no uniform theory that can interpret completely mechanism of the charge transfer. It is generally recognized that such charge transfer is related with the surface work function of a material, and the charge transfer is achieved by transfer of electrons or ions on the contact surfaces. It should be explained that the triboelectric series is only an empirical statistical result, that is, the greater is a difference in the triboelectric series between two kinds of materials, the greater is a probability that amount of the charges generated during their contact conforms to their orders in the triboelectric series. Moreover, actual outcomes will be further affected by many factors, for example, surface roughness of material, environment humidity, existence of a relative friction or not, etc..

Here, the term "contact charges" means that electric charges on surfaces of two kinds of materials, which have a difference in the triboelectric series therebetween, after the contact and the friction between the two kinds of materials. It is generally recognized that the contact charges are only distributed on surfaces of the materials, with a maximum depth of about 10 nanometers. It should be explained that a symbol for the contact charge is that for net charge, that is to say, negative charge accumulation regions may appear on some parts of surface of a material carrying with positive contact charges, while the symbol for net charges on the whole surface thereof is positive.

Specific embodiments of sliding-mode triboelectric generator according to the present disclosure will be described completely and clearly hereinafter in detail with reference to the attached drawings.

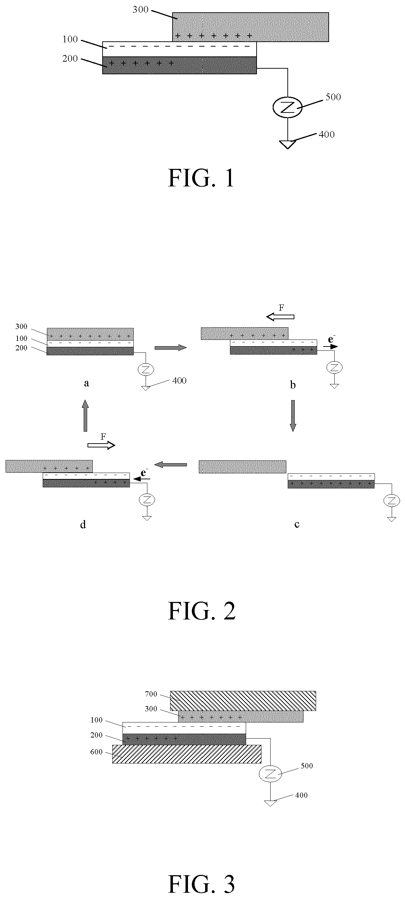

Fig. 1 shows a typical structure of a sliding-mode triboelectric generator according to an embodiment. The generator comprises: a friction layer 100, a first conductive layer 200 configured to be in contact with a lower surface of friction layer 100, and to be electrically connected to an isopotential 400; a second conductive layer 300 provided above the friction layer 100, a lower surface of the second conductive layer 300 being opposite to an upper surface of the friction layer 100; wherein, an electrical signal is outputted between the first conductive layer 200 and the isopotential 400 when a relatively sliding friction occurs between the upper surface of the friction layer 100 and the lower surface of the second conductive layer 300 while a friction area changes in the course of the sliding. If a load or an external power supply circuit 500 is connected between the first conductive layer 200 and the isopotential 400, a current will pass the load or the external circuit 500. The first conductive layer 200 is of an electrode layer provided on the lower surface of the friction layer, that is, an electrode of the generator according to the present invention.

There is a difference in triboelectric series between material for the friction layer 100 and material for the second conductive layer 200. When they are rubbed against each other under the action of an external force while the friction area changes, electrical power is supplied to the load or the external circuit 400 between the conductive layer 200 and the isopotential 300. Information including operating principle of the generator according to the present invention, and configurations and materials of these components of the generator, is introduced in detailed by taking the structure of figure 1 as an example.

Fig. 2 shows an operating principle of the generator according to the present invention. Since there is a difference in triboelectric series between the friction layer 100 and the second conductive layer 300, namely, there is a difference in gaining of electrons between the two. Taken a case where the friction layer 100 has a relative strong electron-gaining ability and the second conductive layer 300 is much more prone to loss electrons as an example, once the lower surface of the second conductive layer 300 comes into contact with the upper surface of the friction layer 100, the upper surface of the friction layer 100 is filled with negative charges while the second conductive layer 300 is filled with positive charges, as shown in section a of Fig. 2. Under the action of an external force F, a relatively sliding friction occurs between the friction layer 100 and the second conductive layer 300 while a friction area changes, breaking a balance of charges in surfaces of the friction layer 100 and the second conductive layer 300. Excess of the negative charges in the surface of the friction layer 100 causes a repelling force to electrons in the first conductive layer 200. Accordingly, electrons run from the first conductive layer 200 to the isopotential 400, as shown in section b of Fig. 2. As a result, current passes through the load or the external power supply circuit 500 connected between the first conductive layer 200 and the isopotential. After the friction layer 100 and the second conductive layer 200 are separated completely from each other, a whole balance of positive and negative charges between the friction layer 100 and the first conductive layer 200 is achieved, no flow of electrons occurs, and, there is no positive charge in the lower surface of the second conductive layer 300, as shown in section c of Fig. 2. Under the action of an external force F in an opposing direction, a relatively sliding friction occurs between the friction layer 100 and the second conductive layer 200, an upper surface of the friction layer 100 and a lower surface of the second conductive layer 300 are rubbed against each other while the friction area changes. Due to a repulsive interaction of the positive charges in the second conductive layer 300 to the positive charges in the first conductive layer 200, electrons run from the isopotential 400 to the first conductive layer 200, so as to output current to the load or the external power supply circuit connected between the first conductive layer 200 and the isopotential, as shown in section d of Fig. 2. When the friction layer 100 is in contact fully with the second conductive layer 300, a whole balance of positive and negative charges between the friction layer 100 and the second conductive layer 300 is achieved, here, no flow of electrons in the external circuit occurs, as shown in section a of Fig. 2. No output of current will be observed between the first conductive layer 200 and the isopotential. As the process is repeated, a pulse current is generated.

Conventional generator, which generates electrical signals relied on a friction between two kinds of triboelectric materials, requires deposition of the electrode layers on surfaces of these triboelectric materials, for transfer of charges by the two electrode layers when an electric potential is generated due to unbalance of the charges between the surfaces of the two triboelectric materials caused by the friction between the two triboelectric materials. Compared with the conventional sliding-mode triboelectric generator, the sliding-mode triboelectric generator according to the present invention is different in that, it is only required to provide a first conductive layer (namely an electrode layer) on the lower surface of the friction layer, to select the other friction material layer from conductive materials (namely the second conductive layer) and electrically connect the first conductive layer with an isopotential (to be grounded or isopotential), and to connect the load or the external circuit between the first conductive layer and the isopotential. Output of the electrical energy generated by this generator is not required to be implemented between the first conductive layer and the second conductive layer, accordingly, the generator according to the present invention not only simplifies the manufacturing process, but also is a widely-used sliding-mode triboelectric generator that converts mechanical energy into electrical energy.

Seen from the abovementioned principle of electricity generation, a key for generation of output-enable electrical signals lies in the difference in triboelectric series between the friction layer 100 and the second conductive layer 300. In the present invention, preferably, material for the friction layer is insulation materials, while material for the lower surface of, or whole, the second conductive layer is electrically conductive material. In these insulation materials used as the friction layer, polymeric insulation material is preferred. All the following polymeric materials may be used for the friction layer 100 of the present invention, and they are presented in order of increments of the abilities of gaining the electrons as follows: polymethyl methacrylate (PMMA), nylon, polyvinyl alcohol, polyester, polyisobutylene, polyurethane sponge, polyethylene terephthalate, polyvinyl butyral, polychloroprene, natural rubber, polyacrylonitrile, poly phenol carbonate, polyetherchloride, polyvinylidene chloride, polystyrene, polyethylene, polypropylene, polyimide, polyvinyl chloride, polydimethylsiloxane (PDMS), polytetrafluoroethylene. Due to reason of the length of the description, it is not exhaustive of all possible materials, and only some specific polymeric materials are listed out here, for reference. Obviously, these specific materials do not become restrictive factors for the scope of the present invention, because those skilled in the art may easily choose other similar materials in accordance with triboelectric characteristics possessed by these materials, under the teachings from the present invention.

It is found in experiments that, the greater is the different between electron-gaining abilities of the material for the friction layer 100 and of the material for the lower surface of the second conductive layer 300, the stronger is the electrical signal outputted by the sliding-mode triboelectric generator. Accordingly, on the basis of the above listed order together with simple comparative experiments, suitable polymeric material is selected as the friction layer 100, in order to achieve optimally electrical signal outputting performance.

The second conductive layer 300 in the generator is only to provide one friction surface for being rubbed against the friction layer 100, instead of being used as an electrode layer. Accordingly, the second conductive layer 300 may wholly be of conductive material, or else, only a thin layer used, as its the lower surface, is of conductive material. For example, a conductive film is manufactured, as the second conductive layer 300, on the surface of the insulation material. The second conductive layer 200 may be in a plate, a sheet, or a film having a thickness ranged of 10 nm -5 mm, preferably of 100 nm-500 µm. The metallic film layer may be manufactured by conventional techniques including megnetron sputtering, evaporation, printing, etc..

Implementation of the present invention will not be affected greatly by the thickness of the friction layer 100. In the present invention, preferably, the friction layer is a film having a thickness of 100nm-5mm, preferably of 1µm-2mm, more preferably of 10µm-800µm, and still more preferably of 20µm-500µm. The films of all these thickness are suitable for the technical solutions of the present invention. The first conductive layer 200 provided on the lower surface of the friction layer 100 is used as an electrode layer of the generator of the present invention. Once the electrical field generated by charges in the surface of the friction layer 100 is unbalance, electrons is transferred from the first conductive layer 200 to the isopotential 400 through the load or the external power supply circuit, so as to balance the charges of the friction layer 100. Conductive materials used for the first electrode layer 200 or the second electrode layer 300 may be selected from metal, indium tin oxide or organic conductor. Commonly used metal includes gold, silver, platinum, aluminum, nickel, copper, titanium, chromium or selenium, and alloy of any of the above. The organic conductor generally comprises conductive polymers, including polypyrrole, polyphenyl thioether, phthalocyanine compounds, polyaniline and/or polythiophene. Since the first electrode layer 200, as an electrode layer, needs to be in good contact with the friction layer 100, the first electrode layer will be manufactured on the lower surface of the friction layer 100 using conventional techniques including including megnetron sputtering, evaporation, printing, etc.. Of course, it is possible to provide a first electrode layer 100 having a relatively greater thickness, e.g., Cu or A1 foils, and then form material for the friction layer on its surface, so as to achieve a good contact between the first electrode layer and the friction layer.

Referring to Fig. 3, for a generator in which the first conductive layer 200 and the friction layer 100 have relatively less thickness, a first substrate 600 may be provided on the lower surface of the first electrode layer 200, so as to enhance stiffness of the generator. Similarly, if the second conductive layer 300 has a relatively less thickness (e.g., conductive film material is used), a second substrate 700 may be provided on the upper surface of the second electrode layer 300, so as to enhance mechanical stiffness of the second conductive layer 300. Combination of the first substrate to the first conductive layer and combination of the second substrate to the second conductive layer may be implemented by conventional methods, such as, bonding or other processes including megnetron sputtering, evaporation, printing, etc., a conductive material layer on the surface of the substrate. Of course, if the first conductive layer or second conductive layer has a relatively great thickness, the first substrate or the second substrate may also be included in the generator. The conductive layer is disposed on the substrate, which supports the conductive layer or isolates the first or second conductive layer from other components.

There is no special requirements on materials for the first substrate 600 and the second substrate 700, and they may be conductor, insulator or semiconductor, e.g., aluminium plate or silicon sheet. The first substrate 600 and the second substrate 700 may be either flexible substrates or rigid substrates, e.g., rubber or glass plate.

In order to improve output performance of the generator, it is preferably that upper surface of the friction layer 100, and/or lower surface of the second conductive layer 300 are fully or particularly distributed with microstructures of nanometer, micrometer or submicrometer magnitudes, to increase effectively contacting areas between the friction layer 100 and the second conductive layer 300, enhancing densities of surface charges. The microstructures preferably comprise nanowires, nanotubes, nanoparticles, nanorods, nano flowers, nano trenches, micro trenches, nano cones, micro cones, nano spheres and spherical micron structures, and arrays of the abovementioned structures, particularly, nano arrays consisted of nanowires, nanotubes or nanorods. It may be linear, cubic or rectangular pyramid shaped arrays manufactured by means of photoetching, plasma etching, etc.. Sizes of each of the units in the array are ranged from nanometer magnitude to micrometer magnitude. The scope of the present invention should not be restricted by unit sizes and shapes of specifically micro- and nano-structures. Microstructures of the surface may be achieved by means of ornaments and coatings of nanomaterials on the upper surface of the friction layer 100 and/or the lower surface of the conductive layer 300.

In additional to the abovementioned manner of physical modification on surfaces of the friction layer (or the second conductive layer), the surfaces, which are rubbed against each other, of the second conductive layer 300 and the friction layer 100 may be chemically modified. It may further improve an amount of transfer of charges at the contacting moment, so as to increase density of the contacting charges and thus output power of the generator. There are two ways of the chemical modification as follows.

One way is that, for the friction layer 100 and the second conductive layer 300 that are rubbed against each other, a functional group which is prone to lose electrons (namely,an electron-losing group) is introduced into a surface of a material having a positive rating in a triboelectric series, or a functional group which is prone to gain electrons (namely, an electron-gaining group) is introduced into a surface of a material having a negative rating in the triboelectric series. Either of them can further improve the amount of transfer of charges at the relatively sliding moment, so as to increase density of the contacting charges and thus output power of the generator. The electron-losing group comprises amino group, hydroxyl group, alkoxyl group, and so on. The electron-gaining group comprises acyl group, carboxyl group, nitro group, sulfonic acid group, and so on. Conventional methods including plasma surface modification may be adopted for introduction of the functional group. For example, the plasma may be from a mixture of oxygen and nitrogen under certain power, so as to introduce the amino group into the surface of the material for the friction layer.

Another way is that, for the friction layer 100 and the second conductive layer 300 that are rubbed against each other, positive charges are introduced into a surface of a material having a positive polarity, while negative charges are introduced into a surface of a material having a negative polarity. Specifically, it may be achieved by a chemical bonding method. For example, surface of a polydimethylsiloxane (PDMS) friction layer may be modified with tetraethoxysilane (TEOS) by a sol-gel method, to make it be in negative. Or, metal gold film layer may be modified with gold nanoparticles containing cetrimonium bromide (CTAB) by a gold-sulfur bonding, to make the whole friction layer positive since the cetrimonium bromide is positive ion. In accordance with electron-gaining/losing performances of the materials of the friction layer or the electrode layer and types of the surface chemical bonding thereof, those skilled in the art may choose suitable modification materials to be bonded, in order to achieve the object of the present invention. As a result, such modifications fall into the protective scope of the present invention.

It is a key in the present invention that the first conductive layer 200 is electrically connected to the isopotential 400 in accordance with the present invention. The isopotential 400 may be a device which provides a large amount of electrical charges. The isopotential may be earth ground or an isopotential circuit. The electrical connection may be a connection of the first conductive layer 200 to the isopotential, via a load or an external circuit that needs supply of electrical power. Once the second conductive layer and the friction layer are rubbed against each other such that whole balance of charges between the second conductive layer and the friction layer are destroyed, charges in the isopotential 400 is transferred to the first conductive layer via the load or the external circuit, that is, the electric signal is applied on the load or the external circuit that needs supply of power supply. In the present invention, the first conductive layer 200 may be connected to the isopotential 400 directly via a load, or, the first conductive layer 200 may be connected to the isopotential 400 via an external circuit, or else, it may be connected between the first conductive layer 200 and the isopotential 400 via a load and an external circuit in parallel. The external circuit may be a simple resistance or a relatively complicated circuit, and, there is no specific limitation here as long as it electrically connects the isopotential 400 to the electrode layer and the resistance is not zero. The external power supply circuit may be electrical appliances including lighting installations.

In the generator according to the present invention, the friction layer 100 or the second conductive layer 300 may be of flexible material or of rigid material, since the sliding friction effect between the two will not be affected by rigidness or stiffness of the materials. If the friction surface is required to be maintained in a flat surface, it may be achieved by supporting of other components, for example, embodiment of addition of the substrate shown in Fig. 3. Accordingly, those skilled in the art may choose rigidness or stiffness of material of the friction layer 100 and the second conductive layer 300 in accordance with actual situation. The generator made of flexible material has the advantages of being deformable once a slight external force is exerted on the flexible, light and thin friction layer or second conductive layer. This deformation will result in a relative displacement between the two friction material layer (the friction layer 100 and the second conductive layer 200), so as to output electric signal by the sliding friction. Use of the flexible material in the nanometer generator of the present invention will allow the generator to be widely applied in the fields of biology and medicine. In use, ultra-slim, flexible, elastic and/or transparent polymer material may be adopted, as the substrate, to perform package, so as to facilitate the use and increase the strength of the generator. Obviously, all the structure disclosed in the present invention may be manufactured from corresponding ultra-flexible and elastic material, to form the flexible sliding-mode triboelectric generator. In addition, the flexible material may also be adopted for the first conductive layer 200, so that the whole generator will be a flexible device.

In a most typical structure of the generator according to the present invention, the upper surface of the friction layer 100 and the lower surface of the second conductive layer 300 are provided to be in contact with each other. The two always maintains surface contact regardless of whether an external force is applied thereon. Under action of the external force, a relatively sliding friction being tangent with the contact surface between the friction layer 100 and the second conductive layer 300 occurs therebetween. By controlling size of the upper surface of the friction layer and the lower surface of the second conductive layer and amount of relative displacement therebetween, it is easy to achieve a change of the friction area during the relatively sliding friction.

In another embodiment of the present invention, the upper surface of the friction layer 100 and the lower surface of the second conductive layer 300 may be configured to not be in contact with each other when no external force is exerted. The upper surface of the friction layer 100 and the lower surface of the second conductive layer 300 will be in contact and a relatively sliding friction being tangent with the contact surface occurs therebetween when an external force is exerted, while the friction layer 100 and the second conductive layer 300 are completedly separated away from each other when no external force is exerted. This design will satisfy requirement of the interval generation, moreover, there will be both the contacting friction and the sliding friction in the process of the friction. In order for achieving this object, there are lots of technical means, including use of conventional distance-controlling components in the art. For example, components liking insulation springs are connected to the lower surface of the first conductive layer 200 and the upper surface of the second conductive layer 300. However, it should be noted that the springs used should not restrict the relative sliding between the friction layer 100 and the second conductive layer 200. The generator of such design may be used in combination with other products. The friction layer 100 and the second conductive layer 200 may be connected respectively to two separated components in other product, to drive the generator to operate by utilizing interval contacting (or approaching) and relative sliding of the two components, so as to achieve the interval electric generation.

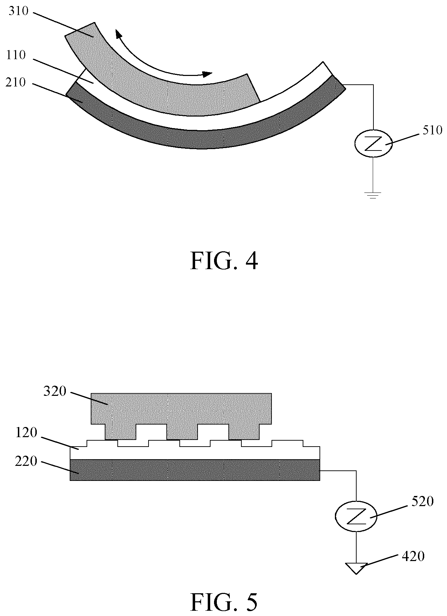

In the present invention, the upper surface of the friction layer 100 or the lower surface of the second conductive layer 300 may be a flat surface (see Fig. 1 and Fig. 3), or may be a curved surface. The lower surface of the friction layer 100 or the upper surface of the electrode layer 200, having the curved surface structure, may also achieve a relatively sliding friction. Preferably, both the lower surface of the friction layer and the upper surface of the conductive layer have the flat surface or curved surface structure at the same time, ensuring tight contacting between the two. See Fig. 4, the friction layer 110 in whole has an arc-shaped structure, especially, the upper surface of the friction layer 110 has an arc shape; and, the second conductive layer 310 in whole has an arc-shaped structure, especially, the lower surface of the second conductive layer 310 has an arc shape. The first conductive layer 210 provided at the lower surface of the friction layer 110 is grounded via the load or the external circuit 510. When, under the action of an external force F, a relatively sliding friction being tangent with the contact surface occurs between the upper surface of the friction layer 100 and the lower surface of the second conductive layer 310 and thus the friction area is changing, current flows through the load 510 between the first conductive layer 210 and earth ground. Preferably, the lower surface of the second conductive layer 310 and the upper surface of the friction layer 110 are curved surfaces which are complemented with each other, e.g., the curved surfaces have the same curvature, ensuring the greatest contacting area between the second conductive layer 310 and the friction layer 110. When, under the action of an external force F, the relatively sliding friction being tangent with the contact surface occurs between the upper surface of the friction layer 110 and the lower surface of the second conductive layer 310, higher output current will be generated.

In the embodiment shown in Fig. 1 and Fig. 4, the upper surface of the friction layer and the lower surface of the second conductive layer are smooth and even surfaces. This structure requires a greater relatively sliding space between the friction layer and the second conductive layer; moreover, in case that there is a greater difference between sizes of the friction layer and the second conductive layer, it does not meet the requirement that the friction area between the friction layer and the second conductive layer in the process of the friction is changing. Accordingly, in the generator according to the present invention, the upper surface of the friction layer and the lower surface of the second conductive layer may be manufactured as uneven surfaces, and the lower surface of the friction layer does not come into contact completely with the upper surface of the electrode layer during relative sliding between the friction layer and the electrode layer. See Fig. 5, the upper surface of the friction layer 120 is an uneven surface of convex-concave structure, and the lower surface of the second conductive layer 320 is an uneven surface of convex-concave structure. The first conductive layer 220 provided on the lower surface of the friction layer 120 is connected to the isopotential 420 via the load 520. When there occurs a relative sliding, under the action of an external force, between the friction layer 120 and the second conductive layer 220, and the contacting area is changing, pulse current flows through the load 520 connected between the first conductive layer 220 and the isopotential 420. In this embodiment, it may be also applied in a case that the upper surface of the friction layer or the lower surface of the second conductive layer may be smaller ones, both the upper surface of the friction layer and the lower surface of the second conductive layer are manufactured as uneven surfaces, change of the friction area may be obtained when the upper surface of the friction layer or the lower surface of the second conductive layer are rubbed against each other under the action of the external force, such that mechanical energy of the external force will be converted into electrical energy.

In the present invention, it is preferably that sizes of the upper surface of the friction layer and of the lower surface of the second conductive layer balance, which ensures that there achieves a greatest contacting area in the process of the relative sliding. More preferably, the upper surface of the friction layer and the lower surface of the second conductive layer are the same both in area and in shape.

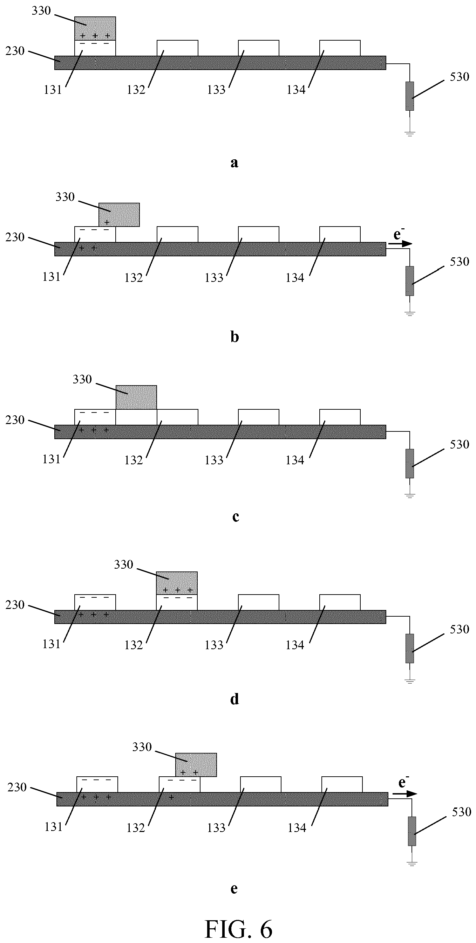

In other embodiments of the present invention, the friction layer may be formed of a plurality of friction units, and upper surfaces of the plurality of friction units together form the upper surface of the friction layer. When there occurs a relative sliding between the upper surface of the friction units and the lower surface of the second conductive layer, while the friction area is changing during the sliding, electrical signal is outputted between the first conductive layer and the isopotential. Wherein, the lower surfaces of the friction units are provided on the first conductive layer. See Fig. 6, the friction layer is formed of friction units 131, 132, 133 and 134. Upper surfaces of the friction units 131, 132, 133 and 134 together form the upper surface of the electrode layer, lower surfaces of the friction units 131, 132, 133 and 134 together are provided on the first conductive layer 230, and the first conductive layer 230 is grounded via an resistance 530. Size of the second conductive layer 330 may be smaller than that of the friction unit or may be greater than that of the friction unit. It is preferred that the lower surface of the second conductive layer is in contact with and rubs against the upper surfaces of two adjacent ones of the friction units asynchronously. Here, operating process of the generator will be introduced by reference with an example where size of the second conductive layer 330 and sizes of the friction units balance, referring to sections a to c of Fig. 6. In an original state, the lower surface of the second conductive layer 300 comes into contact with and relatively slides with relative to the upper surfaces (namely, the upper surface of the friction layer) of the friction units 131, but does not come into contact with the friction units 132, 133 and 134. Since there is a difference in triboelectric series between material for the friction units and material for the second conductive layer, positive charges are filled onto the lower surface of the second conductive layer 330 and negative charges are filled onto the upper surface of the friction units 131, as shown in section a of Fig. 6. When, under the action of an external force F, second conductive layer 330 slides towards the right, relative to the friction units 131 while a friction area between the second conductive layer 330 and the friction units 131 is changing, electrons flow from the first conductive layer 230 to earth ground, as shown in section b of Fig. 6, such that electrical current flows through the resistance 530 connected between the first conductive layer 230 and earth ground, here, a pulse electrical signal will be detected if there is a detection device connected between the first conductive layer and earth ground. The electrical current flows through the resistance 530 till the second conductive layer 330 is separated completedly away from the friction units 131 and continues to slide, as shown in section c of Fig. 6. The second conductive layer 330 continues to slide towards the right, relative to the friction units 131, when the lower surface of the second conductive layer 330 comes into contact with the upper surface of the friction units 132 while there achieves the greatest friction area between it and the upper surface of the friction units 132, positive charges are filled onto the lower surface of the second conductive layer 330 and negative charges are filled onto the upper surface of the friction units 132, as shown in section d of Fig. 6. When the second conductive layer 330 continues to slide towards the right, relative to the friction units 132, and the friction area between the second conductive layer 330 and the friction units 132 is thus changed, electrons flow from the first conductive layer 230 to earth ground, as shown in section e of Fig. 6, such that electrical current again flows through the resistance 530 connected between the first conductive layer 230 and earth ground. The above procedures are repeated when the second conductive layer 330 continues to slide towards the right, so that a pulse current is flowed through the resistance. The generator of such configuration may be applied where the friction layer is stationary while the second conductive layer is provided on a moving object, for electrical generation. For example, a plurality of friction units is arranged on the road surface, the lower surfaces of all the friction units are disposed on the first conductive layer, the first conductive layer is connected to the isopotential via the load and so on, and the second conductive layer is disposed on vehicle. In the course of travel of the vehicle, the second conductive layer will have a relatively sliding friction with the friction units, so as to provide electrical signal for the load and so on. The generator according to the present embodiment may be applied in a touch screen technology, for position-setting of the touch and detection of the movement.

In the abovementioned embodiment, the friction unit may be in any shape, preferably shapes and sizes of the plurality of friction units are the same. For example, they are in elongated rod shape or square shape. The plurality of friction units may be arranged in any manner, preferably be arranged in a preset pattern, which may be preset actually as required, e.g., square shape, rectangle shape, ring shape, cross shape, etc.. For example, they are arranged along four direction of a cross. In other embodiments, preferably, the lower surface of the friction layer is in contact with and rubs against the upper surfaces of two adjacent sub-electrodes asynchronously.

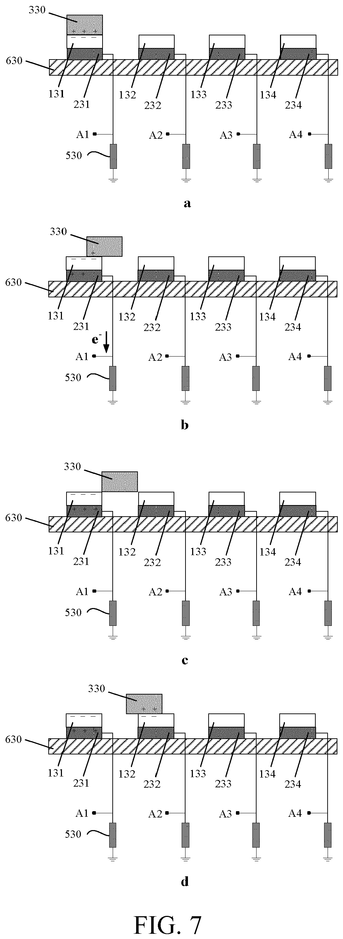

In the generator according to the present invention, the first conductive layer may also be formed of a plurality of first conductive units corresponding to the plurality of friction units, respectively; namely, the lower surface of each of the friction units is provided to be in contact with one first conductive unit. Each of the first conductive units is electrically connected to the isopotential. Operating process of the generator will be introduced in combination with a specific embodiment, by referring to Fig. 7. The first conductive layer is formed of first conductive units 231, 232, 233 and 234, which correspond respectively to the friction units 131, 132, 133 and 134 of the friction layer. Each of the first conductive units is grounded via the resistance 530. Also, output ends A1, A2, A3 and A4, for connection to the detection device that detects whether there is an electrical signal between the corresponding first conductive unit and earth ground may be achieved between each of the first conductive units and the resistance 530. In an original state, the lower surface of the second conductive layer 330 comes into contact with upper surfaces of the friction units 131 and can have a relative sliding with relative to it, but does not come into contact with the friction units 132, 133 and 134. Since there is a difference in triboelectric series between material for the friction units and material for the second conductive layer, the lower surface of the second conductive layer 330 is filled with positive charges while the upper surfaces of the friction units 131 are filled with negative charges, as shown in section a of Fig. 7. When, under the action of an external force F, second conductive layer 330 slides towards the right, relative to the friction units 131, and thus a friction area between the second conductive layer 330 and the friction units 131 is changed, such that electrons flow from the first conductive units 231 to earth ground, as shown in section b of Fig. 7, and electrical current flows through the resistance 530 connected between the first conductive units 231 and earth ground. A detection device, which is connected at the output end A 1 between the first conductive units 231 and earth ground, will detect the pulse electrical signal. The electrical current flows through the resistance 530 till the second conductive layer 330 is separated completedly away from the friction units 131 and continues to slide, as shown in section c of Fig. 7. The second conductive layer 330 continues to slide towards the right, relative to the friction units 131. When the lower surface of the second conductive layer 330 comes into contact with the upper surface of the friction units 132, while, in the course of sliding, positive charges are filled onto the lower surface of the second conductive layer 330 and negative charges are filled onto the upper surface of the friction units 132, till there has the greatest friction area between the lower surface of the second conductive layer 330 and the upper surface of the friction units 132. Due to balance between the positive charges on the lower surface of the second conductive layer 330 and the negative charges on the upper surface of the friction units 132, no charges flows between the first conductive units 232 provided at the lower surface of the friction units 132 and earth ground, as shown in section d of Fig. 7. As the second conductive layer 330 continues to slide towards the right, relative to the friction units 132 while the friction area between the second conductive layer 330 and the friction units 132 is changed, electrons flow through the resistance 530 connected between the first conductive units 232 and earth ground, due to existence of the positive charges on the first conductive units 232 caused by electrostatic induction, and a direction of flow of the current is from the first conductive units 232 to earth ground, which is similar to that shown in section b of Fig. 7. In this embodiment, the substrate 630 can be semiconductor or insulator, preferably insulator, e.g., insulation substrates including organic glass, and so on. The generator of such configuration may be applied in situations where the friction layer is stationary while the second conductive layer is provided on a moving object, for electrical generation. For example, a plurality of friction units are arranged on the road surface, first conductive units are disposed on the lower surface of all the friction units, the first conductive units each are connected to the isopotential via the load, and the second conductive layer is disposed on vehicle. In the course of travel of the vehicle, the second conductive layer will have a relatively sliding friction with the friction units, so as to provide electrical signal for the load and so on. The generator according to the present embodiment may be applied in a touch screen technology, for position-setting of the touch and detection of the movement.

In the abovementioned embodiment, the friction unit may be in any shape, preferably shapes and sizes of the plurality of friction units are the same. For example, they are all in elongated rod shape or square shape. The plurality of friction units may be arranged in any manner, preferably be arranged in a preset pattern, which may be preset actually as required, e.g., square shape, rectangle shape, ring shape, cross shape, etc.. For example, they are arranged along four direction of a cross. In other embodiments, preferably, the lower surface of the second conductive layer is in contact with and rubs against the upper surfaces of two adjacent friction units asynchronously.

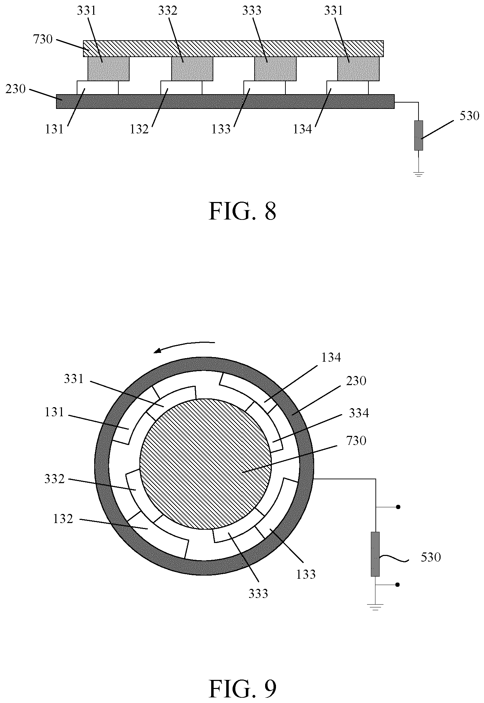

For same principle, in this embodiment, the second conductive layer may also be formed of a plurality of second conductive units. Lower surface of the second conductive layer may be formed by lower surfaces of the plurality of second conductive units. Upper surfaces of the friction units may be provided to be in contact with lower surface of the second conductive layer and will slide against it. The first conductive layer may be a whole one and is provided to be in contact with lower surfaces of the plurality of friction units. Of course, the first conductive layer may also be formed of a plurality of first conductive units. The plurality of first conductive units corresponds to the friction units, respectively, and each is provided to be in contact with lower surface of each of the friction units. The first conductive or each of the first conductive units is grounded via a resistance. Its operating principle is similar to that in Fig. 6 or Fig. 7, and will not be described in detailed. Referring to Fig. 8, the friction layer may also be formed of a plurality of friction units 131, 132, 133 and 134. The plurality of friction units is disposed on the first conductive layer 230, and, upper surface of the friction layer is formed by the upper surfaces of the plurality of friction units. The second conductive layer is formed of a plurality of second conductive units 331, 332, 333 and 334, and lower surface of the second conductive layer is formed by the upper surfaces of the plurality of second conductive units. The upper surfaces of the plurality of second conductive units are provided on the second substrate 730, which is used for supporting the plurality of second conductive units so that lower surfaces of the second conductive layer come into contact with, and slide against, the upper surface of the friction layer. The generator of such configuration is formed of a generator group consisted of a plurality of generating units. When the second substrate 730 drives the plurality of second conductive units to relatively slide against the plurality of friction units, current will flow through the resistance 530 connected between the first conductive layer 230 and earth ground. In practical, by adjusting distances among the plurality of second conductive units and among the plurality of friction units, as many friction units as possible are provided to have a relatively sliding friction against the second conductive units, so as to achieve the greatest contacting area.

Fig. 8 only schematically shows a case where the lower surface of the second conductive layer formed of a plurality of second conductive units is a flat surface and the upper surface of the friction layer formed of a plurality of friction units is a flat surface. In practical, the second substrate 730 as well as the first conductive layer 230 may be designed to have other configurations so that the lower surfaces of the plurality of the second conductive units are in a curved surface (e.g., a cylindrical surface or a prismatic surface, etc.) and the upper surface of the plurality of the friction units are in the curved surface. That is, both the lower surfaces of the plurality of the second conductive units and the upper surface of the plurality of the friction units are in the same curved surface. Structure of theses embodiments will be described hereafter by taking a case where the lower surfaces of the plurality of the second conductive units are in a cylindrical surface as an example. Referring to Fig. 9, which is a schematic view of a cross section of a generator. The second substrate 730 is in a cylinder shape, a plurality of the second conductive units 331, 332, 333 and 334 are distributed evenly on the cylindrical surface of the second substrate 730, and lower surfaces (i.e., the surface that is further away from the surface of the second substrate 730) of the plurality of the second conductive units are also in the same cylindrical surface. The first conductive layer 230 has a cylindrical shape. Lower surfaces of the plurality of the friction units 131, 132, 133 and 132 are provided to be in contact with inner surface of the cylindrically first conductive layer 230, and upper surfaces of the plurality of the friction units are also in the cylindrical surface where the lower surfaces of the plurality of the second conductive units are located. The first conductive layer 230 is electrically connected with earth ground via the resistance 530. In the generator of such configuration, both lower surfaces of the plurality of the second conductive units and the upper surfaces of the plurality of the friction units are in the same cylindrical surface. When the first conductive layer 230 drives the plurality of friction units to have a sliding friction along an arrowed direction against the plurality of the second conductive units driven by the second substrate 730 and the friction area is changing, alternating current flows through the resistance 530. Once output ends are led from both ends of the resistance and are connected to a load, the load will be supplied power.

This generator where the friction layer is formed of a plurality of friction units, in addition to be able to convert a mechanical energy generated from an external force into an electrical energy, will be applied in aspects of detections of sliding positions or sliding distance, etc. of an moving object. In practical applications, the friction layer formed of a plurality of friction units is designed to be a stationary (or relatively stationary) surface while the second conductive layer is a moving object. A plurality of first conductive units each are respectively provided to be in contact with the lower surface of each friction unit, and each are grounded via a testing device. When the moving object is sliding on the surface of the friction layer, to create a relative friction between the friction units and the second conductive layer and render change of contacting area, the corresponding testing device connected to the first conductive unit will detect an electrical signal, by which a position of the moving object will be determined. In addition, in accordance with the testing signals from two successively testing device, a moving direction of the moving object will be determined. Referring to Fig. 7, an output end (A1, A2, A3 and A4), for connection to the contacting device, is led between each first conductive unit and the resistance 530. The moving object 330 (namely the second conductive layer) has a relatively smaller size, preferably, the moving object 330 will only come into contact with one friction unit. No electrical signal will be detected when the moving object 330 is in contact with the friction units 131 without a relative sliding (see section a of Fig. 7). An electrical signal will be detected at the output end A1 when the moving object 330 is moving towards the right while the contacting area is changing, see section b of Fig. 7, and, the electrical signal will be detected at the output end A1 till the moving object is fully separated from the friction units 132. The moving object 330 continues to move towards the right. An electrical signal will be detected at the output end A2 after the moving object 330 has the greatest contacting area with the friction units 132 while the contacting area is changing, and, the electrical signal will not be detected untill the contacting area between the moving object and the friction units 132 is unchanged. Sliding position, sliding direction and sliding distance of the moving object will be determined in accordance with positions of the friction units corresponding to the detecting signals from the detection device connected at the output ends A1 and A2. Accordingly, the sliding-mode triboelectric generator of the present invention can accurately position moving direction and displacement distance of a moving object, which is a vector displacement sensor for sensing a moving object.

Displacement sensor is used to convert a mechanical displacement by means of potentiometer elements into a resistance or voltage output which is in a linear or arbitrary function relationship with the mechanical displacement. A vctor displacement sensor is developed upon the displacement sensor. The vector displacement sensor is used to not only determine a direction of displacement of an object, but also determine position of displacement of the object. Conventional vector displacement sensor mainly is used to achieve accurate positioning of the displacement by means of resistance-varying mode or magnetostriction sensor. Power supplies from external power source are necessary for normal operations of these sensors. A vector displacement sensor which relies on external power supply is not easy to maintain in harsh environment, and also is hardy to be widely applied in future energy crisis. The vector displacement sensor which utilizes the generator of the present invention is a self-driven displacement sensor without involving external power supply. It not only is simple in structure and low in manufacture cost, but also fundamentally overcomes its dependence on external power supply, and may work in long-term and stably.

Specifically, in accordance with operating principle of the abovementioned sliding-mode triboelectric generator, the present invention provides a vector displacement sensor comprising a sliding-mode triboelectric generator as described above, in which a friction layer is formed of a plurality of friction units and a first conductive layer is formed of a plurality of first conductive units. Wherein, one of said first conductive units is provided to be in contact with a lower surface of each of said friction units. A detection device is connected between each of said first conductive units and the isopotential and is configured for detecting the electrical signal. When the sliding friction occurs between the upper surface of the friction layer and the lower surface of the second conductive layer while the friction area changes, position of the second conductive layer is determinable in accordance with position of the detection device by which the electrical signal is detected; or, sliding distance, sliding direction or sliding speed of the second conductive layer is determinable in accordance with position of the detection device by which the electrical signal is detected successively. The plurality of friction units and their corresponding first conductive units will be arranged on a surface of the substrate, to fix the plurality of friction units. A detection device is connected between each first conductive unit and the isopotential. Once a current flows through between the first conductive units and the isopotential, due to one-by-one correspondence relationship between the first conductive units and the friction units, the detection device will record a position of the friction unit which generates electrical signal, correspondingly, a position of the friction unit which has a sliding friction against the second conductive layer. Accordingly, position of the second conductive layer will be determined. Once the second conductive layer has a sliding friction against two friction units successively, electrical signal will be detected successively by two detection devices correspondingly. In accordance with positions, of the detection device and distances and times where/when electrical signal are detected successively by the detection device, sliding distance, sliding direction and sliding speed of the second conductive layer are determined, so as to achieve sensing of the displacement of the moving object (the second conductive layer). A plurality of detection devices may form a detection system in which positional correspondence relationship between each detection device and the friction unit is preset.

In the vector displacement sensor of the present invention, the detection device can be an electric current or electric voltage detecting device, which is configured for outputting an electric current or electric voltage signal when a current flows between the first conductive units and the isopotential. In other embodiments, the detection device may be other lighting element or sounder element which generates signals including sound, light and so on when it is power supplied, such as, buzzer or LED light. Light signal or sound signal will be outputted once the lighting element or the sounder element receives the electrical signal.

The vector displacement sensor of the present invention may also be connected with a computer processing system. The computer system records positional correspondence relationship between the detection devices and the friction units, as well as the times when the electrical signal is detected by the detection devices, and computes easily sliding distance, sliding direction or sliding speed of the friction layer in accordance with the recorded information.

In addition, the vector displacement sensor according to the present invention may further comprise a divider resistance between each of the first conductive units and the isopotential, and the divider resistance is configured for adjusting electrical current and voltage between the first conductive unit and the isopotential. In particular, the divider resistance can be connected in parallel or in series with the detection device.

In particular, each of the first conductive units is connected to the same isopotential (for example, earth ground) through the divider resistance. A detection device is connected between each of the first conductive units and the divider resistance. When the sliding friction occurs between the lower surface of the second conductive layer provided on the moving object and the upper surface of the friction layer while the friction area changes, due to one-by-one correspondence relationship among the detection devices, the first conductive units and the friction units, the detection device which has detected the detecting signal will sense a position of the moving object.

Correspondingly, the present invention also provides a method of power generation. The method comprises:
providing a friction layer, which is provided with a first conductive layer on a lower surface, the first conductive layer being electrically connected, via a load, to an isopotential; and
occurring a relatively sliding friction between the second conductive layer and the upper surface of the friction layer while changing a friction area therebetween, such that electric current flows through the load.
wherein, there is a difference in triboelectric series between material for the friction layer and material for the second conductive layer. Materials and structures of the referred friction layer, the first conductive layer and the second conductive layer may be the same as those for the friction layer first conductive layer and the second conductive layer of the generator according to the present invention, and it will not be repeated here.

Example 1, manufacture of a sliding-mode triboelectric generator.

A friction layer of a device is obtained by cutting out a polydimethylsiloxane film with a length of 10cm and a width of 5cm and a thickness of 100µm. A first conductive layer is obtained by depositing gold film on the lower surface of the polydimethylsiloxane film, a copper wire is used to connect the gold film with a resistance, and the other end of the resistance is grounded. An aluminium foil with a length of 10cm and a width of 5cm and a thickness of 25µm, as the second conductive layer, is secured onto an organic glass material substrate with the same size. The aluminium foil is placed to face the polydimethylsiloxane film. When, under the action of an external force, there occurs a relative sliding between the polydimethylsiloxane and the aluminium foil and a friction area changes, output of a correpsonding electrical signal is obtained at a voltage meter connected at both ends of the resistance. It is explained that the sliding-mode triboelectric generator is able to convert a mechanical energy from an external force into an electrical energy, for power generation.

Example 2, manufacture of a sliding-mode triboelectric generator-based vector displacement sensor.

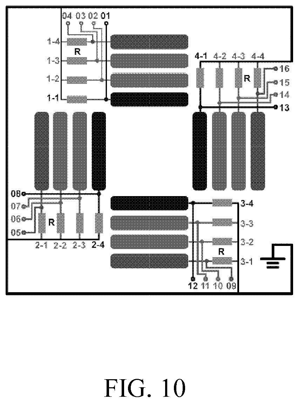

Material for a substrate of a sensor that utilizes a generator, is obtained by laser cutting out an organic glass with a length of 10cm and a width of 10cm and a thickness of 1.59mm. By a manner of megnetron sputtering, sixteen aluminum electrode strips, serving as the first conductive units each with a length of 3cm and a width of 10cm, are manufactured on the substrate. Distance among adjacent first conductive units is 2mm. The sixteen first conductive units are grouped as four groups and four constitute one group, in which the four groups form a cross configuration by distributing in four directions. The four first conductive units in each group are arranged in parallel and equidistantly, as shown in Fig. 10. A polytetrafluoroethylene film, as a friction unit with a width of 10mm and a length of 2.5cm and a thickness of 200µm, is adhered by conductive adhesive to each of the first conductive units. Distance among adjacent friction units is 2mm. There are sixteen friction units, of which four constitute one group and which form a cross configuration in four directions. The four friction units in each group are arranged in parallel and equidistantly. Each of the first conductive units is connected via a copper wire to a divider resistance R, and the other end of the divider resistance is grounded. One output end 01••••••15, 16, for collection of electrical signal, is led between each of the first conductive units and the divider resistance, referring to details of the connection circuit in Fig. 11. The sixteen output ends are connected to the detection devices, respectively. Real time collection of the output signals from the sixteen first conductive units is obtained by the detection devices. A second conductive layer is obtained by cutting out an aluminum sheet with a length of 2 cm and a width of 2 cm and a thickness of 1 mm. The second conductive layer is placed in a blank in the middle of a pattern formed by a plurality of electrode strips. When it slides along any direction, the second conductive layer will have a relatively sliding friction against the polytetrafluoroethylene friction units and a contacting area therebetween changes, so that an electrical signal is outputted to outside at the output end. Moreover, when an object containing the second conductive layer moves over the sensor, different friction units will come into contact with the second conductive layer successively, so that different electrical signals are outputted from the second conductive layer to the outside. By means of analysis upon these signals, displacement direction and displacement position of the object will be obtained.

The above embodiments indicate that displacement direction and displacement position of the object may be determined upon collection of these signals at the output ends. The vector displacement sensor directly adopts a single electrode type sliding-mode triboelectric generator as a triggered sensor and requires no external power supply, and thereby it will work in long-term and stably. In addition, the vector displacement sensor according to the present invention allows the plurality of friction units to be in any shape as required, and also allows a large-scale arrangement of the friction units, and thereby it will applied easily in environments where power source is not easy to use, such as outdoors.

## Claims

1. A sliding-mode triboelectric generator, comprising:
a friction layer (100), a first surface of which is provided to be in contact with a first conductive layer (200), the first conductive layer (200) being electrically connected to an isopotential (400);
a second conductive layer (300) provided above the friction layer (100), a first surface of the second conductive layer (300)being opposite to a second surface of the friction layer (100);
**characterized in that** an electrical signal is outputted when a relatively sliding friction occurs between the second surface of the friction layer (100) and the first surface of the second conductive layer (300)while a friction area changes in the course of the sliding;
and **in that** there is a difference in triboelectric series between material for the second surface of the friction layer (100) and material for the first surface of the second conductive layer.

2. The generator of claim 1, **characterized in that** the first conductive layer (200) is grounded via an external circuit (500) that needs to be power supplied, or is connected to an isopotential (400) circuit; or
**characterized in that** the first conductive layer (200)is electrically connected, via a load, to the isopotential (400) .

3. The generator of claim 1 or 2, **characterized in that** the first surface of the second conductive layer (300)is provided to be in contact with the second surface of the friction layer (100); or
**characterized in that** the second conductive layer (300)does not come into contact with the friction layer (100) when no external force is applied, while, the first surface of the second conductive layer (300)comes into contact with the second surface of the friction layer (100) when an external force is applied.

4. The generator of any one of claims 1-3, **characterized in that** the material for the second surface of the friction layer (100) is insulator material.

5. The generator of claim 4, **characterized in that** the insulator material is selected from PMMA, nylon, polyvinyl alcohol, polyester, polyisobutylene, polyurethane sponge, polyethylene terephthalate, polyvinyl butyral, polychloroprene, natural rubber, polyacrylonitrile, poly phenol carbonate, polyetherchloride, polyvinylidene chloride, polystyrene, polyethylene, polypropylene, polyimide, polyvinyl chloride, polydimethylsiloxane, and polytetrafluoroethylene.

6. The generator of any one of claims 1-5, **characterized in that** the friction layer (100) has a thickness of 100nm ∼ 5mm.

7. The generator of any one of claims 1-6, **characterized in that** the material for the second conductive layer (300)is selected from metal, indium tin oxide, and organic conductor.

8. The generator of any one of claims 1-7, **characterized in that** the second conductive layer (300)comprises film material and has a thickness of 10nm∼5mm.

9. The generator of any one of claims 1-8, **characterized in that** the first surface of the second conductive layer (300)and/or the second surface of the friction layer (100) are/is disturbed fully or partially with microstructure on the scale of a nanometer, micrometer, or submicrometer, the microstructure comprising a structure of nanowire, nanotube, nanoparticle, nanorod, nano flower, nano groove, micron groove, nano cone, micron cone, nanosphere and micronsphere, or an array thereof, or, spots or coatings of nano materials.

10. The generator of any one of claims 1-9, **characterized in that** the first surface of the second conductive layer (300)and/or the second surface of the friction layer (100) are/is chemically modified;
and **in that** a functional group which is prone to lose electrons is introduced into a surface of a material having a positive rating on a triboelectric series, or a functional group which is prone to gain electrons is introduced; or
and **in that** positive charges are introduced into the surface that has the positive rating, and, negative charges are introduced into the surface that has the negative rating.

11. The generator of any one of claims 1-10, **characterized in that** the first surface of the second conductive layer (300)is a flat surface or a curved surface; and/or, the second surface of the friction layer (100) is a flat surface or a curved surface.

12. The generator of claim 11, **characterized in that** the first surface of the second conductive layer (300)and the second surface of the friction layer (100) are surfaces which are complemented with each other.

13. The generator of any one of claims 1-12, **characterized in that** the second surface of the friction layer (100) is an uneven surface with concave-convex structure, and, the first surface of the second conductive layer (300) is an uneven surface with concave-convex structure.

14. The generator of any one of claims 1-13, **characterized in that** the second conductive layer (300)and/or the friction layer (100) are/is of soft material or rigid material; and/or
**characterized in that** the second conductive layer (300)and/or the friction layer (100) are/is of elastic material.

15. The generator of any one of claims 1-14, **characterized in that** it further comprises a first substrate (600) on which the first surface of the first conductive layer (200)is disposed; and/or
a second substrate (700, 730) on which the second surface of the second conductive layer (300)is disposed.

16. The generator of any one of claims 1-15, wherein the friction layer (100) is formed of a plurality of friction units (131, 132, 133, 134), second surfaces of the friction units forming the second surface of the friction layer (100).

17. The generator of claim 16, **characterized in that** the first surface of the second conductive layer (300)is in contact with and rubs against the second surfaces of two adjacent ones of the friction units (131, 132, 133, 134) asynchronously.

18. The generator of claim 16 or 18, **characterized in that** the friction unit (131, 132, 133, 134) has a shape of strip or square.

19. The generator of any one of claims 16-18, **characterized in that** the plurality of friction units (131, 132, 133, 134) is arranged in a preset pattern.

20. The generator of any one of claims 16-19, **characterized in that** the first conductive layer (200)is formed of a plurality of first conductive units (231, 232, 233 and 234) corresponding to the plurality of friction units (131, 132, 133, 134), respectively, each of the first conductive units being electrically connected to the isopotential (400) .

21. The generator of any one of claims 16-20, **characterized in that** the second conductive layer (300) is formed of a plurality of second conductive units (331, 332, 333 and 334), first surfaces of the plurality of second conductive units forming the first surface of the second conductive layer.

22. The generator of claim 21, **characterized in that** first surfaces of the plurality of second conductive units (331, 332, 333 and 334) are in the same flat surface, and, second surfaces of the plurality of friction units are in the same flat surface; or
**characterized in that** first surfaces of the plurality of second conductive units (331, 332, 333 and 334) and second surfaces of the plurality of friction units (131, 132, 133, 134) are in the same curved surface.

23. A vector displacement sensor comprising an generator of claim 20, **characterized in that** a detection device is connected between each of the conductive units and the isopotential (400) and is configured for detecting the electrical signal;
when the sliding friction occurs between the second surface of the friction layer (100) and the first surface of the second conductive layer (300)while the friction area changes, position of the second conductive layer (300)is determinable in accordance with position of the detection device by which the electrical signal is detected, or, sliding distance, sliding direction or sliding speed of the second conductive layer (300)is determinable in accordance with positions of the detection devices by which the electrical signal is detected successively.

24. The vector displacement sensor of claim 23, **characterized in that** the detection device is an electric current or electric voltage detecting device, and the electrical signal is an electric current or electric voltage signal; or
the detection device is a light-emitting element or a sounder element, and a light signal or a sound signal is outputted when the electrical signal is detected by the light-emitting element or the sound element.

25. The vector displacement sensor of claim 23 or 24, **characterized in that** it further comprises a divider resistance between each of the electrode units and the isopotential (400), the divider resistance being connected in parallel or in series with the detection device.

26. A method of power generation, the method comprising:
providing a friction layer (100), a first surface of which being provided with a first conductive layer, and the first conductive layer (200) being electrically connected, via a load, to an isopotential (400) ; and
occurring a relatively sliding friction between a second conductive layer (300)and the second surface of the friction layer (100) while changing a friction area, such that electric current flows through the load.

## Patentansprüche

1. Triboelektrischer Generator mit Gleitmodus, umfassend:
eine Reibungsschicht (100), von der eine erste Oberfläche in Kontakt mit einer ersten leitfähigen Schicht (200) bereitgestellt ist, wobei die erste leitfähige Schicht (200) elektrisch mit einem Isopotential verbunden ist;
eine zweite leitfähige Schicht (300), die über der Reibungsschicht (100) bereitgestellt ist, wobei eine erste Oberfläche der zweiten leitfähigen Schicht (300) einer zweiten Oberfläche der Reibungsschicht (100) entgegengesetzt ist bzw. dieser gegenüberliegt;
**dadurch gekennzeichnet, dass** ein elektrisches Signal ausgegeben wird, wenn eine relative Gleitreibung zwischen der zweiten Oberfläche der Reibungsschicht (100) und der ersten Oberfläche der zweiten leitfähigen Schicht (300) auftritt, während sich ein Reibungsbereich im Verlauf des Gleitens ändert;
und dadurch, dass es einen Unterschied in triboelektrischen Reihen bzw. Serien zwischen Material für die zweite Oberfläche der Reibungsschicht (100) und Material für die erste Oberfläche der zweiten leitfähigen Schicht gibt.

2. Generator nach Anspruch 1, **dadurch gekennzeichnet, dass** die erste leitfähige Schicht (200) über eine externe Schaltung (550) geerdet ist, die mit Leistung versorgt werden muss, oder mit einer Isopotentialschaltung (400) verbunden ist; oder
**dadurch gekennzeichnet, dass** die erste leitfähige Schicht (200) über eine Last elektrisch mit dem Isopotential (400) verbunden ist.

3. Generator nach einem der Ansprüche 1 oder 2, **dadurch gekennzeichnet, dass** die erste Oberfläche der zweiten leitfähigen Schicht (300) so bereitgestellt ist, dass sie mit der zweiten Oberfläche der Reibungsschicht (100) in Kontakt ist; oder
**dadurch gekennzeichnet, dass** die zweite leitfähige Schicht (300) nicht mit der Reibungsschicht (100) in Kontakt kommt, wenn keine externe Kraft ausgeübt wird, während die erste Oberfläche der zweiten leitfähigen Schicht (330) mit der zweiten Oberfläche der Reibungsschicht (100) in Kontakt kommt, wenn eine externe Kraft ausgeübt wird.

4. Generator nach einem der Ansprüche 1-3, **dadurch gekennzeichnet, dass** das Material für die zweite Oberfläche der Reibungsschicht (100) Isolatormaterial ist.

5. Generator nach Anspruch 4, **dadurch gekennzeichnet, dass** das Polymermaterial ausgewählt ist aus PMMA, Nylon, Polyvinylalkohol, Polyester, Polyisobutylen, Polyurethanschaum, Polyethylenterephthalat, Polyvinylbutyral, Polychloropren, Naturkautschuk, Polyacrylnitril, Polyphenolcarbonat, Polyetherchlorid, Polyvinylidenchlorid Polystyrol, Polyethylen, Polypropylen, Polyimid, Polyvinylchlorid, Polydimethylsiloxan und Polytetrafluorethylen.

6. Generator nach einem der Ansprüche 1-5, **dadurch gekennzeichnet, dass** die Reibungsschicht (100) eine Dicke von 100 nm ∼ 5 mm aufweist.

7. Generator nach einem der Ansprüche 1-6, **dadurch gekennzeichnet, dass** das Material für die zweite leitfähige Schicht (300) aus Metall, Indiumzinnoxid und organischem Leiter ausgewählt ist.

8. Generator nach einem der Ansprüche 1-7, **dadurch gekennzeichnet, dass** die zweite leitfähige Schicht (300) Filmmaterial umfasst und eine Dicke von 10 nm ∼ 5 mm aufweist.

9. Generator nach einem der Ansprüche 1-8, **dadurch gekennzeichnet, dass** die erste Oberfläche der zweiten leitfähigen Schicht (300) und/oder die zweite Oberfläche der Reibungsschicht (100) vollständig oder teilweise mit einer Mikrostruktur im Maßstab eines Nanometers, Mikrometers oder Submikrometers gestört bzw. unterbrochen bzw. verteilt sind, wobei die Mikrostruktur eine Struktur aus Nanodraht, Nanoröhrchen, Nanopartikeln, Nanostab, Nanoblume, Nanorille, Mikronrille, Nanokegel, Mikronkegel, Nanosphäre und Mikronkugel oder einer Anordnung davon oder Flecken oder Beschichtungen aus Nanomaterialien umfasst.

10. Generator nach einem der Ansprüche 1-9, **dadurch gekennzeichnet, dass** die erste Oberfläche der zweiten leitfähigen Schicht (300) und/oder die zweite Oberfläche der Reibungsschicht (100) chemisch modifiziert sind/ist;
und dadurch, dass eine funktionelle Gruppe, die dazu neigt, Elektronen zu verlieren, in eine Oberfläche eines Materials eingebracht ist, das eine positive Bewertung für eine triboelektrische Reihe aufweist, oder eine funktionelle Gruppe, die dazu neigt, Elektronen zu gewinnen, eingebracht ist; oder dadurch, dass positive Ladungen in die Oberfläche mit der positiven Bewertung eingebracht sind und negative Ladungen in die Oberfläche mit der negativen Bewertung eingebracht sind.

11. Generator nach einem der Ansprüche 1-10, **dadurch gekennzeichnet, dass** die erste Oberfläche der zweiten leitfähigen Schicht (300) eine flache Oberfläche oder eine gekrümmte Oberfläche ist; und/oder die zweite Oberfläche der Reibungsschicht (100) eine flache Oberfläche oder eine gekrümmte Oberfläche ist.

12. Generator nach Anspruch 11, **dadurch gekennzeichnet, dass** die erste Oberfläche der zweiten leitfähigen Schicht (300) und die zweite Oberfläche der Reibungsschicht (100) Oberflächen sind, die miteinander komplementiert sind.

13. Generator nach einem der Ansprüche 1-12, **dadurch gekennzeichnet, dass** die zweite Oberfläche der Reibungsschicht (100) eine unebene Oberfläche mit einer konkav-konvexen Struktur ist und die erste Oberfläche der zweiten leitfähigen Schicht (300) eine unebene Oberfläche mit einer konkav-konvexen Struktur ist.

14. Generator nach einem der Ansprüche 1-13, **dadurch gekennzeichnet, dass** die zweite leitfähige Schicht (300) und/oder die Reibungsschicht (100) aus einem weichen Material oder einem starren Material bestehen/besteht; und/oder **dadurch gekennzeichnet, dass** die zweite leitfähige Schicht (300) und/oder die Reibungsschicht (100) aus elastischem Material bestehen/besteht.

15. Generator nach einem der Ansprüche 1-14, **dadurch gekennzeichnet, dass** er ferner ein erstes Substrat (660), auf dem die erste Oberfläche der ersten leitfähigen Schicht (200) angeordnet ist; und/oder
ein zweites Substrat (700, 730) umfasst, auf dem die zweite Oberfläche der zweiten leitfähigen Schicht (300) angeordnet ist.

16. Generator nach einem der Ansprüche 1-15, wobei die Reibungsschicht (100) aus einer Mehrzahl von Reibungseinheiten (131, 132, 133, 134) gebildet ist, wobei die zweiten Oberflächen der Reibungseinheiten die zweite Oberfläche der Reibungsschicht (100) bilden.

17. Generator nach Anspruch 16, **dadurch gekennzeichnet, dass** die erste Oberfläche der zweiten leitfähigen Schicht (300) in Kontakt mit den zweiten Oberflächen zweier benachbarter Reibungseinheiten (131, 132, 133, 134) ist und asynchron gegen diese reibt.

18. Generator nach Anspruch 16 oder 18, **dadurch gekennzeichnet, dass** die Reibungseinheit (131, 132, 133, 134) die Form eines Streifens oder Quadrats aufweist.

19. Generator nach einem der Ansprüche 16-18, **dadurch gekennzeichnet, dass** die Mehrzahl von Reibungseinheiten (131, 132, 133, 134) in einem vorgegebenen Muster angeordnet sind.

20. Generator nach einem der Ansprüche 16-19, **dadurch gekennzeichnet, dass** die erste leitfähige Schicht (200) aus einer Mehrzahl von ersten leitfähigen Einheiten (231, 232, 233 und 234) gebildet ist, die jeweils der Mehrzahl von Reibungseinheiten (131, 132, 133 bzw. 134) entsprechen, wobei jede der ersten leitfähigen Einheiten elektrisch mit dem Isopotential verbunden ist.

21. Generator nach einem der Ansprüche 16-20, **dadurch gekennzeichnet, dass** die zweite leitfähige Schicht (300) aus einer Mehrzahl von zweiten leitfähigen Einheiten (331, 332, 333 und 334) gebildet ist, wobei die ersten Oberflächen der Mehrzahl von zweiten leitfähigen Einheiten die erste Oberfläche der zweiten leitfähigen Schicht bilden.

22. Generator nach Anspruch 21, **dadurch gekennzeichnet, dass** sich die ersten Oberflächen der Mehrzahl von zweiten leitfähigen Einheiten (331, 332, 333 und 334) in derselben flachen Oberfläche befinden und sich die zweiten Oberflächen der Mehrzahl von Reibungseinheiten in derselben flachen Oberfläche befinden; oder
**dadurch gekennzeichnet, dass** sich die ersten Oberflächen der Mehrzahl von zweiten leitfähigen Einheiten (331, 332, 333 und 334) und die zweiten Oberflächen der Mehrzahl von Reibungseinheiten (131, 132, 133, 134) in derselben gekrümmten Oberfläche befinden.

23. Vektorverlagerungssensor, umfassend einen Generator nach Anspruch 20, **dadurch gekennzeichnet, dass**
eine Erfassungsvorrichtung zwischen jede der leitfähigen Einheiten und das Isopotential (400) geschaltet ist und zum Erfassen des elektrischen Signals konfiguriert ist;
wenn die Gleitreibung zwischen der zweiten Oberfläche der Reibungsschicht (100) und der ersten Oberfläche der zweiten leitfähigen Schicht (300) auftritt, während sich der Reibungsbereich ändert, die Position der zweiten leitfähigen Schicht (300) in Übereinstimmung mit der Position der Erfassungsvorrichtung bestimmbar ist, durch die das elektrische Signal detektiert wird, oder Gleitdistanz, Gleitrichtung oder Gleitgeschwindigkeit der zweiten leitfähigen Schicht (300) in Übereinstimmung mit Positionen der Erfassungsvorrichtungen bestimmbar ist, durch die das elektrische Signal sukzessive erfasst wird.

24. Vektorverlagerungssensor nach Anspruch 23, **dadurch gekennzeichnet, dass** die Erfassungsvorrichtung eine Erfassungsvorrichtung für elektrischen Strom oder elektrische Spannung ist und das elektrische Signal ein elektrisches Strom- oder elektrisches Spannungssignal ist; oder
die Erfassungsvorrichtung ein Licht emittierendes Element oder ein Schallgeberelement ist und ein Lichtsignal oder ein Schallsignal ausgegeben wird, wenn das elektrische Signal durch das Licht emittierende Element oder das Schallelement erfasst wird.

25. Vektorverlagerungssensor nach Anspruch 23 oder 24, **dadurch gekennzeichnet, dass** er ferner einen Teilerwiderstand zwischen jeder der Elektrodeneinheiten und dem Isopotential (400) umfasst, wobei der Teilerwiderstand parallel oder in Reihe mit der Erfassungsvorrichtung geschaltet ist.

26. Verfahren zur Stromerzeugung, wobei das Verfahren umfasst:
Bereitstellen einer Reibungsschicht (100), von der eine erste Oberfläche in Kontakt mit einer ersten leitfähigen Schicht (200) bereitgestellt ist, wobei die erste leitfähige Schicht (200) elektrisch mit einem Isopotential verbunden ist; und
Auftretenlassen einer relativen Gleitreibung zwischen einer zweiten leitfähigen Schicht (300) und der zweiten Oberfläche der Reibungsschicht (100), während ein Reibungsbereich geändert wird, so dass elektrischer Strom durch die Last fließt.

## Revendications

1. Générateur triboélectrique en mode glissant, comprenant :
une couche de frottement (100), dont une première surface est prévue pour être en contact avec une première couche conductrice (200), la première couche conductrice (200) étant connectée électriquement à un isopotentiel (400) ;
une seconde couche conductrice (300) prévue au-dessus de la couche de frottement (100), une première surface de la seconde couche conductrice (300) étant opposée à une seconde surface de la couche de frottement (100) ;
**caractérisé en ce qu'**un signal électrique est fourni en sortie lorsqu'un frottement relativement glissant survient entre la seconde surface de la couche de frottement (100) et la première surface de la seconde couche conductrice (300) tandis qu'une aire de frottement change au cours du glissement ;
et **en ce qu'**il y a une différence de série triboélectrique entre un matériau pour la seconde surface de la couche de frottement (100) et un matériau pour la première surface de la seconde couche conductrice.

2. Générateur selon la revendication 1, **caractérisé en ce que** la première couche conductrice (200) est mise à la terre via un circuit externe (500) qui a besoin d' être alimenté, ou est connectée à un circuit isopotentiel (400) ; ou
**caractérisé en ce que** la première couche conductrice (200) est connectée électriquement, via une charge, à l'isopotentiel (400).

3. Générateur selon la revendication 1 ou 2, **caractérisé en ce que** la première surface de la seconde couche conductrice (300) est prévue pour être en contact avec la seconde surface de la couche de frottement (100) ; ou
**caractérisé en ce que** la seconde couche conductrice (300) ne vient pas en contact avec la couche de frottement (100) lorsqu'aucune force externe n'est appliquée, tandis que la première surface de la seconde couche conductrice (300) vient en contact avec la seconde surface de la couche de frottement (100) lorsqu'une force externe est appliquée.

4. Générateur selon l'une quelconque des revendications 1 à 3, **caractérisé en ce que** le matériau pour la seconde surface de la couche de frottement (100) est un matériau isolant.

5. Générateur selon la revendication 4, **caractérisé en ce que** le matériau isolant est choisi parmi le PMMA, le nylon, le poly(alcool vinylique), le polyester, le polyisobutylène, une éponge de polyuréthane, le poly(téréphtalate d'éthylène), le poly(vinyl butyral), le polychloroprène, le caoutchouc naturel, le polyacrylonitrile, le poly(carbonate de phénol), le poly(chlorure d'éther), le poly(chlorure de vinylidène), le polystyrène, le polyéthylène, le polypropylène, le polyimide, le poly(chlorure de vinyle), le polydiméthylsiloxane, et le polytétrafluoroéthylène.

6. Générateur selon l'une quelconque des revendications 1 à 5, **caractérisé en ce que** la couche de frottement (100) a une épaisseur de 100 nm à 5 mm.

7. Générateur selon l'une quelconque des revendications 1 à 6, **caractérisé en ce que** le matériau pour la seconde couche conductrice (300) est choisi parmi un métal, l'oxyde d'indium-étain, et un conducteur organique.

8. Générateur selon l'une quelconque des revendications 1 à 7, **caractérisé en ce que** la seconde couche conductrice (300) comprend un matériau en film et a une épaisseur de 10 nm à 5 mm.

9. Générateur selon l'une quelconque des revendications 1 à 8, **caractérisé en ce que** la première surface de la seconde couche conductrice (300) et/ou la seconde surface de la couche de frottement (100) est/sont perturbée(s) totalement ou partiellement avec une microstructure à l'échelle d'un nanomètre, d'un micromètre, ou d'un submicromètre, la microstructure comprenant une structure de nanofil, nanotube, nanoparticule, nanotige, nano fleur, nano rainure, micro rainure, nano cône, micro cône, nanosphère et microsphère, ou un réseau de ceux-ci, ou, des taches ou des revêtements de nano matériaux.

10. Générateur selon l'une quelconque des revendications 1 à 9, **caractérisé en ce que** la première surface de la seconde couche conductrice (300) et/ou la seconde surface de la couche de frottement (100) est/sont modifiée(s) chimiquement ;
et **en ce qu'**un groupe fonctionnel qui est enclin à perdre des électrons est introduit dans une surface d'un matériau ayant un régime nominal positif sur une série triboélectrique, ou un groupe fonctionnel qui est enclin à gagner des électrons est introduit ; ou
et **en ce que** des charges positives sont introduites dans la surface qui a le régime nominal positif, et, des charges négatives sont introduites dans la surface qui a le régime nominal négatif.

11. Générateur selon l'une quelconque des revendications 1 à 10, **caractérisé en ce que** la première surface de la seconde couche conductrice (300) est une surface plate ou une surface incurvée ; et/ou, la seconde surface de la couche de frottement (100) est une surface plate ou une surface incurvée.

12. Générateur selon la revendication 11, **caractérisé en ce que** la première surface de la seconde couche conductrice (300) et la seconde surface de la couche de frottement (100) sont des surfaces qui sont complémentaires l'une de l'autre.

13. Générateur selon l'une quelconque des revendications 1 à 12, **caractérisé en ce que** la seconde surface de la couche de frottement (100) est une surface irrégulière de structure concavo-convexe, et, la première surface de la seconde couche conductrice (300) est une surface irrégulière de structure concavo-convexe.

14. Générateur selon l'une quelconque des revendications 1 à 13, **caractérisé en ce que** la seconde couche conductrice (300) et/ou la couche de frottement (100) est/sont en matériau souple ou en matériau rigide ; et/ou
**caractérisé en ce que** la seconde couche conductrice (300) et/ou la couche de frottement (100) sont en matériau élastique.

15. Générateur selon l'une quelconque des revendications 1 à 14, **caractérisé en ce qu'**il comprend en outre un premier substrat (600) sur lequel la première surface de la première couche conductrice (200) est disposée ; et/ou
un second substrat (700, 730) sur lequel la seconde surface de la seconde couche conductrice (300) est disposée.

16. Générateur selon l'une quelconque des revendications 1 à 15, dans lequel la couche de frottement (100) est formée d'une pluralité d'unités de frottement (131, 132, 133, 134), des secondes surfaces des unités de frottement formant la seconde surface de la couche de frottement (100).

17. Générateur selon la revendication 16, **caractérisé en ce que** la première surface de la seconde couche conductrice (300) est en contact avec et se frotte contre les secondes surfaces de deux unités adjacentes des unités de frottement (131, 132, 133, 134) de façon asynchrone.

18. Générateur selon la revendication 16 ou 18, **caractérisé en ce que** l'unité de frottement (131, 132, 133, 134) a une forme de bande ou de carré.

19. Générateur selon l'une quelconque des revendications 16 à 18, **caractérisé en ce que** la pluralité d'unités de frottement (131, 132, 133, 134) est agencée selon un motif préétabli.

20. Générateur selon l'une quelconque des revendications 16 à 19, **caractérisé en ce que** la première couche conductrice (200) est formée d'une pluralité de premières unités conductrices (231, 232, 233 et 234) correspondant respectivement à la pluralité d'unités de frottement (131, 132, 133, 134), chacune des premières unités conductrices étant connectée électriquement à l'isopotentiel (400).

21. Générateur selon l'une quelconque des revendications 16 à 20, **caractérisé en ce que** la seconde couche conductrice (300) est formée d'une pluralité de secondes unités conductrices (331, 332, 333 et 334), des premières surfaces de la pluralité de secondes unités conductrices formant la première surface de la seconde couche conductrice.

22. Générateur selon la revendication 21, **caractérisé en ce que** des premières surfaces de la pluralité de secondes unités conductrices (331, 332, 333 et 334) sont dans la même surface plate, et des secondes surfaces de la pluralité d'unités de frottement sont dans la même surface plate ; ou
**caractérisé en ce que** des premières surfaces de la pluralité de secondes unités conductrices (331, 332, 333 et 334) et des secondes surfaces de la pluralité d'unités de frottement (131, 132, 133, 134) sont dans la même surface incurvée.

23. Capteur de déplacement vectoriel comprenant un générateur de la revendication 20, **caractérisé en ce que**
un dispositif de détection est connecté entre chacune des unités conductrices et l'isopotentiel (400) et est configuré pour détecter le signal électrique ;
lorsque le frottement glissant survient entre la seconde surface de la couche de frottement (100) et la première surface de la seconde couche conductrice (300) tandis que l'aire de frottement change, une position de la seconde couche conductrice (300) peut être déterminée conformément à une position du dispositif de détection grâce auquel le signal électrique est détecté, ou une distance de glissement, une direction de glissement ou une vitesse de glissement de la seconde couche conductrice (300) peut être déterminée conformément à des positions des dispositifs de détection grâce auxquels le signal électrique est détecté successivement.

24. Capteur de déplacement vectoriel selon la revendication 23, **caractérisé en ce que** le dispositif de détection est un dispositif de détection de tension électrique ou de courant électrique, et le signal électrique est un signal de tension électrique ou de courant électrique ; ou
le dispositif de détection est un élément électroluminescent ou un élément émetteur de son, et un signal de lumière ou un signal de son est fourni en sortie lorsque le signal électrique est détecté par l'élément électroluminescent ou l'élément de son.

25. Capteur de déplacement vectoriel selon la revendication 23 ou 24, **caractérisé en ce qu'**il comprend en outre une résistance diviseuse entre chacune des unités d'électrode et l'isopotentiel (400), la résistance diviseuse étant connectée en parallèle ou en série avec le dispositif de détection.

26. Procédé de génération de puissance, le procédé comprenant :
la fourniture d'une couche de frottement (100), dont une première surface est pourvue d'une première couche conductrice, et la première couche conductrice (200) est connectée électriquement, via une charge, à un isopotentiel (400) ; et
la survenue d'un frottement relativement glissant entre une seconde couche conductrice (300) et la seconde surface de la couche de frottement (100) tout en changeant une aire de frottement, de sorte qu'un courant électrique circule à travers la charge.
